# EUROPÄISCHE PATENTANMELDUNG

(11) **EP 2 947 872 A2**
(43) Veröffentlichungstag der Anmeldung: **25.11.2015**
(21) Anmeldenummer: 15184924.7
(22) Anmeldetag: 11.09.2015
(51) Int. Cl.: H04N 7/10

(54) **MATRIXSCHALTUNG FÜR HOCHFREQUENZSIGNALE**

(30) Priorität: 12.09.2014 DE 102014113221
(71) Anmelder: DEV Systemtechnik GmbH & Co. KG, 61169 Frieberg (DE); Technische Universität Berlin, 10623 Berlin (DE)
(72) Erfinder: Tschoban, Christian, 14550 Groß Kreutz (DE); Beyreuther, Anne, 12047 Berlin (DE); Bierwirth, Micha, 10589 Berlin (DE); Thognon, Kwami, 12099 Berlin (DE)
(74) Vertreter: Tergau & Walkenhorst Patentanwälte - Rechtsanwälte

(57) **Zusammenfassung**

Eine Hochfrequenz-Matrixschaltung (1), umfassend eine Mehrzahl von Signaleingängen und eine Mehrzahl von Signalausgängen, ausgebildet zur bedarfsweisen Herstellung einer Anzahl von Signalverbindungen für analoge Signale zwischen jeweils zumindest einem der Signaleingänge und zumindest einem der Signalausgänge, umfassend ein Hauptmatrixmodul (4), eine Anzahl von den Signaleingängen zugeordneten Eingangsmatrixmodulen (8), und eine Anzahl von den Signalausgängen zugeordneten Ausgangsmatrixmodulen (10) soll eine besonders flexible Übertragung von analogen Signalen bei besonders hoher Signalqualität ermöglichen. Dazu ist das Hauptmatrixmodul (4) auf einer Rückkarte (2) angeordnet, ein Eingangsmatrixmodul (8) und/oder ein Ausgangsmatrixmodul (10) auf einer über eine Steckverbindung (16) mit der Rückkarte (2) verbundenen Steckkarte angeordnet, und die jeweilige Steckverbindung (16) als Direktsteckverbindung ausgebildet.

## Beschreibung

Die Erfindung betrifft eine Hochfrequenz-Matrixschaltung, umfassend eine Mehrzahl von Signaleingängen und eine Mehrzahl von Signalausgängen, ausgebildet zur bedarfsweisen Herstellung einer Anzahl von Signalverbindungen für analoge Signale zwischen jeweils zumindest einem der Signaleingänge und zumindest einem der Signalausgänge, umfassend ein Hauptmatrixmodul, eine Anzahl von den Signaleingängen zugeordneten Eingangsmatrixmodulen, und eine Anzahl von den Signalausgängen zugeordneten Ausgangsmatrixmodulen.

Die Hochfrequenztechnik (auch HF-Technik) befasst sich mit der Elektrotechnik im Hochfrequenz-Bereich. Sie ist unter anderem von Bedeutung für die Gebiete der Radio- und Fernsehtechnik, Nachrichtentechnik, Sende- und Empfangstechnik, Antennentechnik, Radartechnik, insbesondere beim Empfang von über Satellit ausgestrahlten Signalen. HF-Technik wird in Verkabelungssystemen, insbesondere zum Empfang von Fernseh- und/oder Rundfunkprogrammen verwendet. Hierbei werden üblicherweise koaxiale Anschlusskabel verwendet, über die die hochfrequenten, in der Regel analogen HF-Signale übermittelt werden.

An Knotenpunkten, an denen viele dieser HF-Signale ankommen und in zeitlich variabler Form an viele Empfänger verteilt werden müssen, kommen sogenannte Hochfrequenz-Matrixschaltungen zur Anwendung. Diese umfassen eine Vielzahl von Signaleingängen und -ausgängen, an die die beschriebenen koaxialen oder optischen Anschlusskabel angeschlossen werden können, und sind dafür ausgebildet, über entsprechende mittels HF-geeigneten Schaltern schaltbare Verbindungen in ihrem Inneren bedarfsweise über manuelle Einstellung eines Benutzers oder automatisiert Signalverbindungen, d.h. Übertragungskanäle zwischen beliebigen der Signaleingänge und -ausgänge herzustellen. Solche Matrixschaltungen kommen auch zur Anwendung, wenn flexible Redundanzlösungen für einkommende Signale gebraucht werden. Betreiber sind z.B. Fernsehanstalten, Kabelfernsehgesellschaften oder aber auch das Bundespresseamt.

Die Hochfrequenz-Matrixschaltung weist einen dreistufigen Aufbau auf, der aus einem Hauptmatrixmodul besteht, welches mit den Signaleingängen und - ausgängen über spezielle Eingangsmatrixmodule und Ausgangsmatrixmodule verbunden ist. Jedes dieser Eingangs- und Ausgangsmatrixmodule kann eine bestimmte Anzahl von Signalen aus Signaleingängen bzw. zu Signalausgängen verarbeiten. Der dreistufige Aufbau bietet den Vorteil, dass die Matrixschaltung durch die hierdurch erreichte Flexibilität in der Anzahl der Eingangsmatrixmodule und der Ausgangsmatrixmodule sowohl hinsichtlich Anzahl der Signaleingänge und -ausgänge als auch der Anzahl der gleichzeitig möglichen Signalverbindungen fast beliebig konfigurierbar wird. Es kann sowohl eine symmetrische Matrixschaltung mit gleicher Anzahl von Signaleingängen und - ausgängen konfiguriert werden, Als auch eine unsymmetrische Matrixschaltung mit voneinander abweichenden Anzahlen vom Signaleingängen und -ausgängen. Die jeweilige Anzahl kann sogar vom Betreiber während des Betriebs variiert werden.

Bei den hier beschriebenen mehrstufigen Matrizen werden analoge hochfrequente Signale mit einer relativ hohen Bandbreite verarbeitet. Dies ist ein zentrales Merkmal und insbesondere eine wichtige Abgrenzung gegenüber Systemen, in denen digitale Kommunikationssignale verschaltet werden, wie sie z.B. aus der EP 1 599 055 B1 bekannt sind. Bei derartigen digitalen Systemen kommen häufig Busstrukturen zur Bündelung der Kommunikationssignale zum Einsatz. Für analoge Hochfrequenz-Signale ist der Einsatz einer Bus-ähnlichen Struktur jedoch grundsätzlich ausgeschlossen. Stattdessen müssen sämtliche Signale immer einzeln über diskrete Pfade geschaltet und geführt werden. Die geforderte hohe Bandbreite der Nutzsignale (50 bis 3000 MHz) und die damit verbundene Forderung nach möglichst linearen Übertragungseigenschaften über diesen gesamten Frequenzbereich stellen Randbedingungen dar, die weit schwieriger zu realisieren sind, als in einem digitalen Kommunikationssystem. Da die Signaleigenschaften eines analogen Kommunikationssignals u.a. durch jeden Steckübergang direkt negativ beeinflusst werden, addieren sich solche Einflüsse in einem komplexeren System notwendigerweise zu einer Gesamt-Signal-Verschlechterung auf. Anders als bei digitalen Signalen lassen sich solche Signalverfälschungen auch nicht mehr ohne weiteres nachträglich aus dem Nutzsignal wieder eliminieren.

Es ist nunmehr Aufgabe der Erfindung, eine Hochfrequenz-Matrixschaltung der eingangs genannten Art anzugeben, welche eine besonders flexible Übertragung von analogen Signalen bei besonders hoher Signalqualität ermöglicht.

Diese Aufgabe wird erfindungsgemäß dadurch gelöst, dass das Hauptmatrixmodul auf einer Rückkarte angeordnet ist, ein Eingangsmatrixmodul und/oder ein Ausgangsmatrixmodul auf einer über eine Steckverbindung mit der Rückkarte verbundenen Steckkarte angeordnet sind, und die jeweilige Steckverbindung als Direktsteckverbindung ausgebildet ist

Die jeweiligen Module sind somit als Leiterplatten ausgebildet, vorteilhafterweise als mehrlagige, d.h. Multilayer-Leiterplatte in HDI-(High Density Interconnection-)Technologie. Das Hauptmatrixmodul stellt die auch als Backplane bezeichnete Rückkarte mit mehreren Steckplätzen mit Steckverbindungen für die Eingangs- und Ausgangsmatrixmodule dar. Hierdurch wird ein besonders kompakter Aufbau der Matrixschaltung realisiert.

Werden die Hochfrequenzverbindungen zwischen zwei Leiterplatten nur mit koaxialen Steckverbindern gelöst, muss für jeden Signalpfad immer ein Stecker und eine Buchse benutzt werden. Wegen der notwendigen einwandfreien Steckverbindung der mehreren HF-Signalpfade zwischen zwei Leiterplatten müssen die einzelnen koaxialen Stecker gegen die Buchsen sehr genau ausgerichtet sein und im ganz genauen Raster platziert werden. Auf Grund der für diesen Fall geforderten kleinen Fertigungstoleranzen ist es hierbei nicht möglich, Durchsteck- und Oberflächenmontage-Technologien für Stecker und Buchse zu kombinieren. Daher ist die jeweilige Steckverbindung als Direktsteckverbindung ausgebildet. Eine derartige Direktsteckverbindung wird auch als Card-Edge-Verbindung bezeichnet. Die Leiterbahnen der als Leiterplatten ausgebildeten Eingangsmatrixmodule und Ausgangsmatrixmodule, bilden an einem Rand der Leiterkarte einseitig oder beidseitig Kontaktflächen. Dieser Rand der Leiterplatte wird dann in eine schlitzförmige Steckkupplung ("Slot") der Gegenseite auf der Backplane gesteckt. Hierdurch ergibt sich die Möglichkeit einer ganz besonders platzsparenden Konstruktion der Matrixschaltung.

In vorteilhafter Ausgestaltung der Hochfrequenz-Matrixschaltung sind die Signaleingänge auf einer Anzahl von mit einem Eingangsmatrixmodul lösbar verbundenen Eingangsfunktionsmodulen und/oder die Signalausgänge auf einer Anzahl von mit einem Ausgangsmatrixmodul lösbar verbundenen Ausgangsfunktionsmodulen angeordnet. Bei den bisher im Stand der Technik bekannten Matrix-Schaltungen ist der Signaleingang üblicherweise mit der Matrix integriert, d.h. es gibt keine expliziten Eingangsmodule. Gleiches gilt für den Signalausgang. Die Eingangs- und Ausgangsmodule sind typischerweise Bestandteil der Matrixmodule. Die freizügige Variation oder die Änderung weiterer Funktionalitäten ohne Tausch oder Umbau der ganzen Matrix ist damit nicht möglich. Eine wie hier vorgesehen separate Anordnung ermöglicht hingegen eine besonders hohe Flexibilität hinsichtlich der Funktionalität je nach Art der an die Signaleingänge und -ausgänge angeschlossenen Bausteine außerhalb der Matrixschaltung. Diese können durch Austausch der Eingangsfunktionsmodule oder Ausgangsfunktionsmodule auch während des Betriebs variiert werden. Dabei ist analog zu den Eingangsmatrixmodulen und/oder den Ausgangsmatrixmodulen ein Eingangsfunktionsmodul und/oder ein Ausgangsfunktionsmodul auf einer über eine als Direktsteckverbindung ausgestaltete Steckverbindung mit der Rückkarte verbundenen Steckkarte angeordnet sind. Zur Beschreibung der Rückkarte und der Steckkarten wird auf den obigen entsprechenden Abschnitt verwiesen. Eingangsmatrixmodul und Eingangsfunktionsmodul bzw. Ausgangsmatrixmodul und Ausgangsfunktionsmodul sind in einer derartigen Konfiguration auch über die Backplane verbunden. Dies erlaubt eine besonders platzsparende Konstruktion.

Vorteilhafterweise ist der Steckplatz der Direktsteckverbindung, d.h. die vorgenannte Steckkupplung mittels Oberflächenmontage auf der Rückkarte befestigt. Sie stellt somit ein sogenanntes surface-mounted device (SMD, deutsch: oberflächenmontiertes Bauelement) dar. SMD-Bauelemente haben im Gegensatz zu Bauelementen der Durchsteckmontage (englisch Through Hole Technology, THT), den sogenannten bedrahteten Bauelementen, keine Drahtanschlüsse, sondern werden mittels lötfähiger Anschlussflächen direkt auf die Backplane gelötet (Flachbaugruppe). Hierdurch wird der Freiheitsgrad für die Leiterbahnführung innerhalb einer als Multilayer-Leiterplatte ausgebildeten Backplane erheblich erhöht, so dass diese wesentlich kompakter realisiert werden kann.

Damit die Hochfrequenz-Matrixschaltung den bereits genannten Anforderungen an die Hochfrequenztechnik besonders gut genügt, sollte eine Reihe vorteilhafter Maßnahmen hinsichtlich der Eigenschaften der Direktsteckverbindung getroffen werden. Diese sind aufgrund von Materialschwankungen und unterschiedlichen Technologien schwerlich als geometrische Parameter anzugeben. Allerdings können für den Fachmann klare elektrische Spezifikationen im Sinne von Auslegungskriterien angegeben werden: Hierbei ist die Direktsteckverbindung zunächst vorteilhafterweise für eine Impedanz von 50 Ohm ausgebildet. Die Optimierung der Übergänge wird dabei so durchgeführt, dass die Strukturen (Durchkontaktierungsregion, Lötpad, Stripline) eine entsprechend geringe elektrische Diskontinuität aufweisen.

Weiterhin weist die Direktsteckverbindung vorteilhafterweise eine Reflektionsdämpfung von mehr als 14 dB, vorzugsweise von mehr als 25 dB aufweist. Dazu wird die Optimierung der Übergänge so durchgeführt, dass die Strukturen (Durchkontaktierungsregion, Lötpad, Stripline) auch eine entsprechend geringe geometrische Diskontinuität aufweisen. Der genannte Wert von 25 dB gilt dabei für den gesamten Verbund, d.h. den gesamten Signalpfad in der Direktsteckverbindung.

Darüber hinaus ist es vorteilhaft, wenn der Mindestabstand zwischen den Leiterbahnen der Direktsteckverbindung derart ausgebildet ist, dass ein Übersprechen zwischen den Leiterbahnen von weniger als 60 dB gewährleistet ist. Dieser Mindestabstand gilt insbesondere für die mit einem Hochfrequenzsignal tatsächlich beschalteten Pins.

Eine derartige Beabstandung kann dabei insbesondere vorteilhaft dadurch erfolgen, dass beiderseits der Direktsteckverbindung abgehende Leiterbahnen entlang der Länge der Direktsteckverbindung versetzt zueinander angeordnet sind. Das bedeutet, dass entlang der Länge des Slots abwechselnd Leiterbahnen auf der einen und der anderen Längsseite des Slots abgehen. Durch die genannten Maßnahmen wird eine Nutzung von Card-Edge-Verbindungen für die HF-Technik realisierbar.

Vorteilhafterweise ist die Hochfrequenz-Matrixschaltung für einen Frequenzbereich zwischen 50 MHz und 3 GHz ausgebildet. Eine derartige Matrixschaltung eignet sich besonders für den eingangs genannten Anwendungszweck. Hierbei ist zu beachten, dass bei derartigen höheren Frequenzen parasitäre (= zusätzliche ungewollte) Eigenschaften bei der Signalverarbeitung immer wichtiger werden. Beim Einsatz von HF-Transistoren müssen z. B. Ersatzschaltbilder eingesetzt werden, die zusätzliche Widerstände, Kapazitäten oder Induktivitäten enthalten. Auch unterscheiden sich Baugruppen gegenüber solchen anderer Frequenzbereiche, da hier die elektromagnetischen Wellen mit entsprechend kurzen Wellenlängen für das Verhalten wichtig sind. Es existieren neue Bauteile wie Antennen, Hohlleiter, Wanderfeldröhren. Diese Eigenschaften ermöglichen es dem Fachmann kaum, auf aus anderen Bereichen wie der Digitalelektronik oder Niederfrequenztechnik bekannte Vorrichtungen und Verfahren zurückzugreifen.

In der Hochfrequenz-Matrixschaltung umfassen das Hauptmatrixmodul und/oder ein Eingangsmatrixmodul und/oder ein Ausgangsmatrixmodul vorteilhafterweise jeweils eine Trivialmatrix. Die Trivialmatrizen der Eingangs- und Ausgangsmatrixmodule sind mit der Trivialmatrix des Hauptmatrixmoduls verschaltet. Unter einer Trivialmatrix wird eine einstufige Matrix verstanden, in der jeder Signaleingang entsprechend der Anzahl der Signalausgänge geteilt wird und jeder der Signalausgängen über einen entsprechenden Schalter entsprechend der Anzahl der Signaleingänge geschaltet wird. Eine derartige Ausgestaltung ermöglicht eine besonders hohe Flexibilität hinsichtlich der Verschaltung der Signaleingänge und -ausgänge über die Einrichtung von Signalverbindungen.

Vorteilhafterweise ist die Hochfrequenz-Matrixschaltung nicht-blockierend und/oder verteilend ausgebildet. Auch hierdurch wird eine besonders hohe Flexibilität der Matrixschaltung erreicht. Nicht-Blockierend bedeutet hierbei, dass jeder Signalausgang der Matrixschaltung auf einen Signaleingang schaltbar ist, unabhängig von der Beschaltung der anderen Signalausgänge. Verteilend bedeutet, dass ein Signaleingang gleichzeitig auf mehrere bis alle Signalausgänge geschaltet werden kann.

Vorteilhafterweise ist ein Eingangsfunktionsmodul und/oder ein Ausgangsfunktionsmodul für eine Impedanz von 50 Ohm und/oder 75 Ohm und/oder für optische Signale ausgebildet. So können z.B. Eingangsfunktionsmodule oder Ausgangsfunktionsmodule mit unterschiedlicher Impedanz an den Signaleingängen und Signalausgängen verwendet werden, als auch solche mit optischen oder koaxialen Eingängen. Die Matrixschaltung ist damit hochflexibel anpassbar.

Noch vorteilhafter ist eine Hochfrequenz-Matrixschaltung, bei der ein Eingangsfunktionsmodul und/oder ein Ausgangsfunktionsmodul mit Mitteln zur Durchführung einer oder mehrerer der folgenden Funktionen ausgebildet sind:
- Messung der Pegels,
- Ausgleich frequenzabhängiger Dämpfung,
- Signalverstärkung,
- LNB-Stromversorgung.

Es ist von bisherigen Matrizen bekannt, neben der eigentlichen Matrixfunktion (Schalten der HF-Verbindungen vom Signaleingang zu beliebigem Signalausgang) auch zusätzliche Funktionalitäten zu realisieren. Entsprechende Mittel, d.h. Baugruppen etc. hierzu sind dem Fachmann bekannt. Werden diese Funktionen auf den separaten Eingangsfunktionsmodulen und/oder den Ausgangsfunktionsmodulen realisiert, ergibt sich auch hier die besonders hohe Flexibilität in der Anwendung und Anpassbarkeit während des Betriebes. Zu den Funktionen, die hier bedarfsweise pro Signaleingang und -ausgang (ggf. gruppiert) realisiert werden können, zählen die Pegelmessung, der Ausgleich frequenzabhängiger Dämpfung (sog. Tilt), die Signalverstärkung oder die Stromversorgung eines rauscharmen Signalumsetzers (vom englischen Low Noise Block, kurz LNB) der die erste, im Brennpunkt einer Parabolantenne befindliche elektronische Baugruppe einer Satellitenempfangsanlage darstellt.

Die Überwachung, dass ein HF-Signalpfad tatsächlich geschaltet wurde, d.h. die Signalverbindung zwischen Signaleingang und Signalausgang durch entsprechende Schaltung der Matrix hergestellt ist, wird bis jetzt immer mit einem Hilfsmittel oder durch eine indirekte Methode festgestellt. Beispielsweise sind bei koaxialen Schaltern (Relais) zusätzliche Meldekontakte vorgesehen, die mit den HF-Kontakten auf einem Relaisanker befestigt sind. Hierbei wird geprüft, ob der jeweilge Schalter geschaltet hat. Nachteilig an einer derartigen Methode ist, dass zwar eine gewisse Fehlersicherheit erreicht wird, aber tatsächlich nicht kontrolliert werden kann, ob das gewünschte Signal tatsächlich am Signalausgang ankommt. Vorteilhafterweise umfasst die Hochfrequenz-Matrixschaltung daher ein Vergleichsmodul, welches dafür ausgebildet ist, die jeweiligen Pegel eines Signaleingangs und eines Signalausgangs zu ermitteln, zwischen denen eine Signalverbindung hergestellt ist. Das Vergleichsmodul kann als separates Bauteil realisiert sein, in eine zentrale Steuereinheit der HF-Matrixschaltung integriert sein oder auch als Softwaremodul ausgebildet sein. Durch die Pegelmessung am Signaleingang und am mit ihm verbundenen Signalausgang kann zweifelsfrei festgestellt werden, ob die Signalverbindung hergestellt ist, auch für den Fall, dass die Relaiskontakte zwar in die geschlossene Stellung bewegt wurden, aber dennoch aufgrund eines anderen Fehlers die Signalverbindung nicht entstanden ist. Eine derartige Pegelmessung kann wie bereits beschrieben vorteilhafterweise auf den Eingangsfunktionsmodulen bzw. den Ausgangsfunktionsmodulen realisiert sein.

Vorteilhafterweise ist das Vergleichsmodul dafür ausgebildet, zumindest anhand des Pegels des Signaleingangs einen Sollpegel für den jeweiligen über die Signalverbindung verbundenen Signalausgang zu ermitteln. Neben dem Pegel am Signaleingang ist das Vergleichsmodul dabei dafür ausgebildet, sämtliche weiteren Faktoren mit einzukalkulieren, die für eine Pegelveränderung relevant sind, so z.B. eine ggf. durchgeführte Verstärkung, einen Ausgleich frequenzabhängiger Dämpfung, eine Signalverstärkung, oder aber Länge und Geometrie des tatsächlich innerhalb der Matrix geschalteten Signalpfads. Hierfür können entsprechende aktuelle Informationen an das Vergleichsmodul gesendet werden, z.B. von den Eingangsfunktionsmodulen bzw. den Ausgangsfunktionsmodulen, oder aber (z.B. für Informationen hinsichtlich der Verluste auf den jeweiligen Signalpfaden) Informationen vorab manuell gemessen und in einem Datenspeicher im Vergleichsmodul hinterlegt werden. Aus all diesen Information ermittelt das Vergleichsmodul den Sollpegel.

Vorteilhafterweise ist das Vergleichsmodul dafür ausgebildet, bei einer vorgegebenen Mindestabweichung des Pegels am Signalausgang vom Sollpegel einen Defekt der Signalverbindung zu ermitteln. Die Mindestabweichung definiert dabei eine gewisse Toleranz. Sollte ein Pegel eine definierte Toleranz nicht erreichen, zeigt die Matrixschaltung einen Defekt des Übertragungsweges an. Aus dieser Information können je nach Konfiguration der Matrixschaltung manuelle oder automatische Schaltfunktionen abgeleitet werden.

In weiterer vorteilhafter Ausgestaltung der Hochfrequenz-Matrixschaltung umfasst diese einen Bildschirm mit Mehrfingergestenerkennung zur Herstellung der jeweiligen Signalverbindungen. Da durch die beschriebene Ausgestaltung, insbesondere in Kombination mit den beschriebenen Direktsteckverbindungen, Matrixschaltungen mit sehr vielen Signaleingängen und Signalausgängen auf kleinstem Raum realisierbar sind, besteht ebenfalls die Notwendigkeit, die Bedieneinheit der Matrixschaltung entsprechend zu miniaturisieren. Gleichzeitig müssen aber auf der kleinen Bedieneinheit entsprechend große Schaltermatrizen dargestellt werden. Dies lässt sich durch Nutzung eines Multi-Touch-Screens (englisch touch = berühren; Bildschirm mit Mehrfingergestenerkennung) realisieren, der gleichzeitig mehrere Berührungen erfassen kann. Hierdurch kann die Darstellung der großen Matrix durch Vergrößern und Verkleinern, indem man z.B. zwei Finger gegeneinander bewegt, besonders einfach auf einem kleinen Bildschirm realisiert werden. Durch Berührung des Displays können die Signalverbindungen gesetzt werden.

Die Erfindung wird anhand einer Zeichnung näher erläutert. Darin zeigen:
FIG 1 eine schematische Darstellung der Komponenten einer Hochfrequenz-Matrixschaltung
FIG 2 eine schematische Darstellung der geometrischen Anordnung der die Komponenten bildenden Leiterplatten der Hochfrequenz-Matrixschaltung
FIG 3 eine schematische Darstellung einer Steckverbindung zwischen zwei Leiterplatten im Querschnitt, und
FIG 4 eine schematische Darstellung der Steckverbindung in der Aufsicht.

Gleiche Teile sind in allen Figuren mit denselben Bezugszeichen versehen.

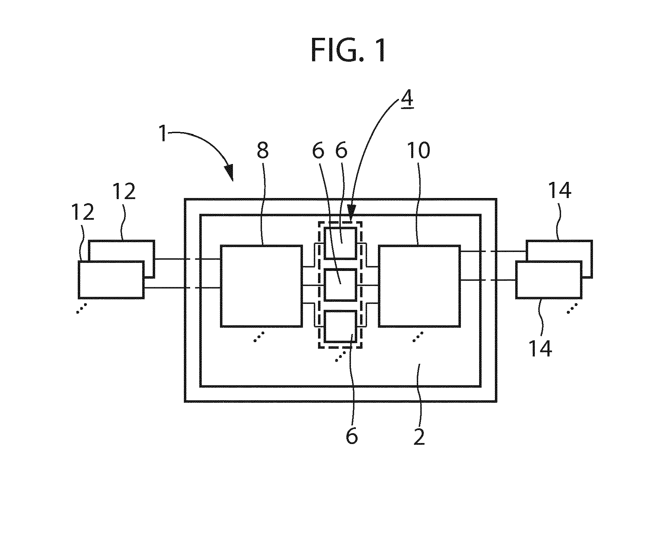

FIG 1 zeigt einen schematischen Aufbau einer Hochfrequenz-(HF-)Matrixschaltung 1. Die HF-Matrixschaltung 1 ist ein System, das über mehrere Signaleingänge und mehrere Signalausgänge für HF-Signale verfügt. Die Hauptfunktionalität der HF-Matrixschaltung 1 besteht darin, dass man zwischen einem beliebigen Signaleingang und einem beliebigen Signalausgang einen Übertragungskanal herstellen kann.

Die hier beschriebene HF-Matrixschaltung 1 ist frei konfigurierbar bis zur Größe 64x64 und kann hinsichtlich der Anzahl der Signaleingänge und Signalausgänge vom Betreiber während des Betriebes variiert werden. Die Matrix ist in der Lage, analoge Signale zu übertragen und deckt den Frequenzbereich von 50 MHz bis 3 GHz ab. Der Aufbau ist als dreistufige, nicht-blockierende, verteilende Matrix realisiert. Der prinzipielle Systemaufbau der HF-Matrixschaltung ist in FIG 1 dargestellt.

Die HF-Matrixschaltung 1 umfasst eine Rückplatte 2 mit einem Hauptmatrixmodul 4 aus mehreren parallel geschalteten Trivialmatrizen 6, sowie eingangsseitig ein Eingangsmatrixmodul 8 sowie ausgangsseitig ein Ausgangsmatrixmodul 10. Eingangsmatrixmodul 8 und Ausgangsmatrixmodul 10 sind ebenfalls als Trivialmatrizen aufgebaut und sind über das Hauptmatrixmodul 4 miteinander verbunden.

Mit dem Eingangsmatrixmodul 8 sind lösbar mehrere Eingangsfunktionsmodule 12 verbunden, auf denen jeweils mehrere Signaleingänge 13 angeordnet sind.
Ebenso sind mit dem Ausgangsmatrixmodul 10 lösbar mehrere Ausgangsfunktionsmodule 14 verbunden, auf denen jeweils mehrere Signalausgänge 15 angeordnet sind. Eingangsfunktionsmodule 12 und Ausgangsfunktionsmodule 14 sind austauschbar und können mit koaxialen und/oder optischen Signaleingängen 13 und Signalausgängen 15 verschiedenster Impedanzen bestückt sein. Zudem weisen einzelne Eingangsfunktionsmodule 12 und Ausgangsfunktionsmodule 14 Baugruppen auf, die zu speziellen Funktionen ausgebildet sind wie Messung der Pegel an den Signaleingängen 13 und - ausgängen 15, Ausgleich frequenzabhängiger Dämpfung, Signalverstärkung oder LNB-Stromversorgung.

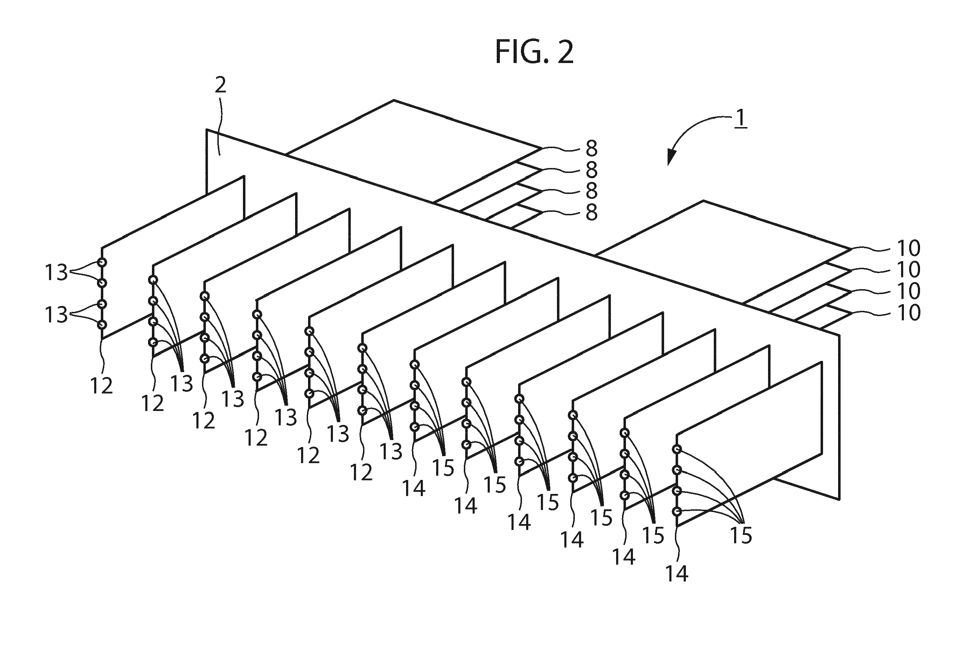

Die geometrische Anordnung der Bausteine stellt FIG 2 dar. Das Hauptmatrixmodul 4 ist hier auf der Rückplatte 2 integriert und nicht separat dargestellt. Die Eingangsmatrixmodule 8 und Eingangsfunktionsmodule 12 sowie die Ausgangsmatrixmodule 10 und Ausgangsfunktionsmodule 14 sind als Steckkarten beidseitig auf die Rückplatte 2 in einer Direktsteckverbindung aufgebracht. Alle genannten Module sind als Leiterplatten in HDI-Multilayer-Technologie gefertigt.

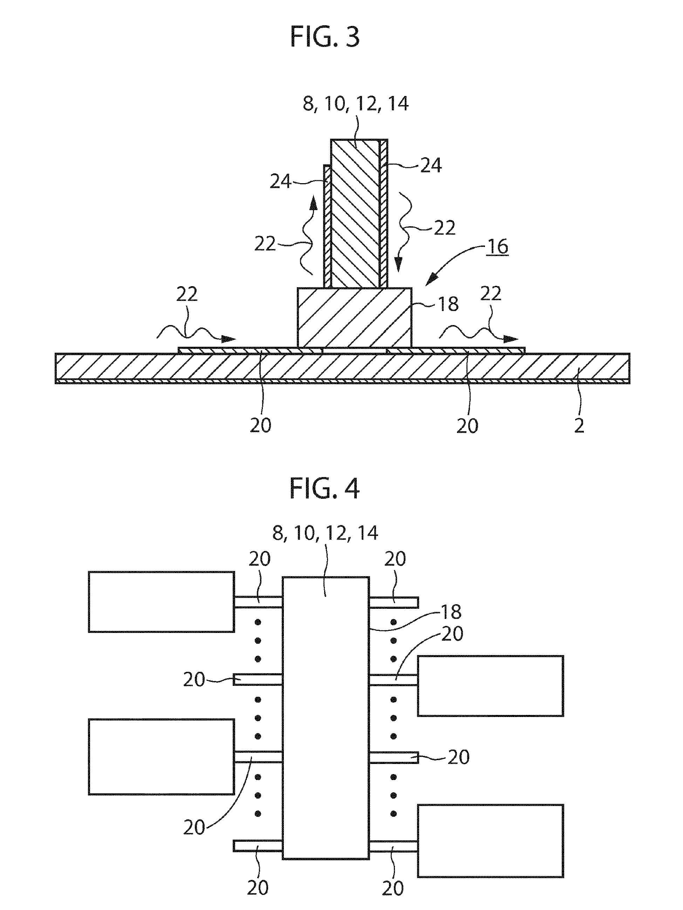

Die Steckverbindung 16 zwischen den Modulen 8, 10, 12, 14 und der Rückplatte wird in den FIG 3 und 4 näher erläutert. FIG 3 zeigt die Steckverbindung 16 im Querschnitt. Der als Slot ausgebildete Steckplatz 18 ist in Oberflächenmontage-Technologie auf der Rückplatte 2 befestigt. Über die auf der Oberfläche der Rückplatte 2 angeordneten Leiterbahnen 20 können beiderseitig analoge Signale 22 zum und vom Steckplatz 18 gelangen.

In den Steckplatz 18 ist eine Leiterplatte eines der Module 8, 10, 12, 14 gesteckt. Die auf der Oberfläche der Module 8, 10, 12, 14 befindlichen Leiterbahnen 24, die bis an den im Steckplatz 18 steckenden Rand geführt sind, kontaktieren im Steckplatz 18, so dass ein galvanischer Kontakt entsteht.

Dabei wird die Verbindung so ausgelegt, dass nur ein geringes Übersprechen zwischen zwei benachbarten Leitungen entsteht und darüber hinaus eine geringe Reflektion und Dämpfung über die eigentlichen Verbindungen. Speziell wurde hier die Optimierung der Übergänge so durchgeführt, dass die Strukturen (Durchkontaktierungs-Region, Lötpad, Stripline) eine geringe geometrische und elektrische Diskontinuität aufweisen. Das bedeutet, dass zum einen alle Strukturen an 50 Ohm angepasst sind (elektrische Diskontinuität) und im Verbund (gesamter Signalpfad) eine Reflektion kleiner als 25 dB aufweisen (geometrische Diskontinuität).

Dafür wird zum einen das Design der Anschlussstrukturen auf beiden Boards so optimiert, dass eine optimale Anpassung zwischen den Anschluss-Pads auf den Boards und den Pins des Steckverbinders vorhanden ist. Als zweiten Punkt der Optimierung müssen die Signalpfade entlang des Steckverbinders so ausgewählt werden, dass ein geringes Übersprechen entsteht. Um das Übersprechen zu minimieren, sind die Abstände zwischen den Leiterbahnen so gewählt, dass der Crosstalk (Übersprechen) kleiner als 60dB ist.

Eine typische Verschaltungsmöglichkeit ist in FIG 4 dargestellt, die eine Aufsicht der Steckverbindung 16 aus der FIG 3 zeigt, in der die von beiden Seiten anlaufenden Leiterbahnen 20 an den Steckplatz 18 sichtbar werden. Hierbei wird von gegenüberliegenden Leiterbahnen 20 immer nur eine Leiterbahn 20 verwendet, wobei sich die verwendete Seite jeweils entlang der Länge des Steckplatzes 18 abwechselt. Auch sind zwischen den Leiterbahnen 20 theoretisch vorhandene Kontakte des Steckplatzes 18 freigelassen, um einen ausreichenden Abstand zu gewährleisten.

Mit Hilfe dieses Ansatzes und einem optimierten Design können ähnlich gute Ergebnisse erreicht werden wie mit koaxialen Steckverbindern, die einen deutlich höheren Platzbedarf aufweisen und höhere Kosten verursachen.

Die Hochfrequenz-Matrixschaltung 1 verfügt zudem über ein nicht näher dargestelltes Vergleichsmodul, welches eine reale Schaltungsüberwachung ermöglicht. Das Vergleichsmodul kann als separates Bauteil realisiert sein, in eine zentrale Steuereinheit der HF-Matrixschaltung 1 integriert sein oder auch als Softwaremodul ausgebildet sein. Durch die Messung des Signalpegels auf jedem Signaleingang 13und Signalausgang 15 ist eine reale Überwachung/Überprüfung des geschalteten HF-Signalpfades möglich. Das Vergleichsmodul kennt den Pegel am Signaleingang 13 und erwartet unter Kenntnis der Verluste auf dem Signalpfad sowie der den Pegel beeinflussenden Funktionen einen entsprechenden Pegel am Signalausgang 15 des geschalteten HF-Signalpfades. Sollte ein Pegel eine definierte Toleranz nicht erreichen, zeigt die HF-Matrixschaltung einen Defekt des Übertragungsweges an. Aus dieser Information können je nach Konfiguration der Matrix manuelle oder automatische Schaltfunktionen abgeleitet werden.

Zur Bedienung und insbesondere zur Einstellung der gewünschten Signalverbindungen zwischen den Signaleingängen 13 und Signalausgängen 15 weist die HF-Matrixschaltung 1 schließlich ein nicht näher dargestelltes Multi-Touch-Display auf.

### Bezugszeichenliste

- 1: Hochfrequenz-Matrixschaltung
- 2: Rückplatte
- 4: Hauptmatrixmodul
- 6: Trivialmatrix
- 8: Eingangsmatrixmodul
- 10: Ausgangsmatrixmodul
- 12: Eingangsfunktionsmodule
- 13: Signaleingang
- 14: Ausgangsfunktionsmodule
- 15: Signalausgang
- 16: Steckverbindung
- 18: Steckplatz
- 20: Leiterbahn
- 22: Signal
- 24: Leiterbahn

## Patentansprüche

1. Hochfrequenz-Matrixschaltung (1), umfassend eine Mehrzahl von Signaleingängen (13) und eine Mehrzahl von Signalausgängen (15), ausgebildet zur bedarfsweisen Herstellung einer Anzahl von Signalverbindungen für analoge Signale zwischen jeweils zumindest einem der Signaleingänge (13) und zumindest einem der Signalausgänge (15), umfassend ein Hauptmatrixmodul (4), eine Anzahl von den Signaleingängen (13) zugeordneten Eingangsmatrixmodulen (8), und eine Anzahl von den Signalausgängen (15) zugeordneten Ausgangsmatrixmodulen (10),
**dadurch gekennzeichnet, dass**
das Hauptmatrixmodul (4) auf einer Rückkarte (2) angeordnet ist, ein Eingangsmatrixmodul (8) und/oder ein Ausgangsmatrixmodul (10) auf einer über eine Steckverbindung (16) mit der Rückkarte (2) verbundenen Steckkarte angeordnet sind, und die jeweilige Steckverbindung (16) als Direktsteckverbindung ausgebildet ist.

2. Hochfrequenz-Matrixschaltung (1) nach Anspruch 1, bei der die Signaleingänge (13) auf einer Anzahl von mit einem Eingangsmatrixmodul (8) lösbar verbundenen Eingangsfunktionsmodulen (12) und/oder die Signalausgänge (15) auf einer Anzahl von mit einem Ausgangsmatrixmodul (10) lösbar verbundenen Ausgangsfunktionsmodulen (14) angeordnet sind, wobei ein Eingangsfunktionsmodul (12) und/oder ein Ausgangsfunktionsmodul (14) auf einer über eine Steckverbindung (16) mit der Rückkarte (2) verbundenen Steckkarte angeordnet sind, und wobei die jeweilige Steckverbindung (16) als Direktsteckverbindung ausgebildet ist.

3. Hochfrequenz-Matrixschaltung (1) nach Anspruch 1 oder 2, bei der der Steckplatz (18) der Direktsteckverbindung mittels Oberflächenmontage auf der Rückkarte (2) befestigt ist.

4. Hochfrequenz-Matrixschaltung (1) nach einem der vorhergehenden Ansprüche, bei der die Direktsteckverbindung für eine Impedanz von 50 Ohm ausgebildet ist.

5. Hochfrequenz-Matrixschaltung (1) nach einem der vorhergehenden Ansprüche, bei der die Direktsteckverbindung eine Reflektionsdämpfung von mehr als 14 dB, vorzugsweise mehr als 25 dB aufweist.

6. Hochfrequenz-Matrixschaltung (1) nach einem der vorhergehenden Ansprüche, bei der der Mindestabstand zwischen den Leiterbahnen (20, 24) der Direktsteckverbindung derart ausgebildet ist, dass ein Übersprechen zwischen den Leiterbahnen (20, 24) von weniger als -60 dB gewährleistet ist.

7. Hochfrequenz-Matrixschaltung (1) nach Anspruch 6, bei der beiderseits der Direktsteckverbindung abgehende Leiterbahnen (20, 24) entlang der Länge der Direktsteckverbindung versetzt zueinander angeordnet sind.

8. Hochfrequenz-Matrixschaltung (1) nach einem der vorhergehenden Ansprüche, ausgebildet für einen Frequenzbereich zwischen 50 MHz und 3 GHz.

9. Hochfrequenz-Matrixschaltung (1) nach einem der vorhergehenden Ansprüche, bei der das Hauptmatrixmodul (4) und/oder ein Eingangsmatrixmodul (8) und/oder ein Ausgangsmatrixmodul (10) jeweils eine Trivialmatrix (6) umfassen.

10. Hochfrequenz-Matrixschaltung (1) nach einem der vorhergehenden Ansprüche, die nicht-blockierend und/oder verteilend ausgebildet ist.

11. Hochfrequenz-Matrixschaltung (1) nach zumindest Anspruch 2, bei der ein Eingangsfunktionsmodul (12) und/oder ein Ausgangsfunktionsmodul (14) für eine Impedanz von 50 Ohm und/oder 75 Ohm und/oder für optische Signale ausgebildet ist.

12. Hochfrequenz-Matrixschaltung (1) nach zumindest Anspruch 2, bei der ein Eingangsfunktionsmodul (12) und/oder ein Ausgangsfunktionsmodul (14) mit Mitteln zur Durchführung einer oder mehrerer der folgenden Funktionen ausgebildet sind:
- Messung der Pegel,
- Ausgleich frequenzabhängiger Dämpfung,
- Signalverstärkung,
- LNB-Stromversorgung.

13. Hochfrequenz-Matrixschaltung (1) nach einem der vorhergehenden Ansprüche, umfassend einen Bildschirm mit Mehrfingergestenerkennung zur Herstellung der jeweiligen Signalverbindungen.
